# EUROPEAN PATENT APPLICATION

(11) **EP 4 269 455 A1**
(43) Date of publication of application: **01.11.2023**
(21) Application number: 21910156.5
(22) Date of filing: 29.11.2021
(51) Int. Cl.: C08F 220/12, C08F 220/44, C08F 220/58, H01M 4/13, H01M 4/139, H01M 4/62, H01G 11/38

(54) **COMPOSITION FOR ELECTROCHEMICAL ELEMENT POSITIVE ELECTRODES, SLURRY COMPOSITION FOR ELECTROCHEMICAL ELEMENT POSITIVE ELECTRODES, POSITIVE ELECTRODE FOR ELECTROCHEMICAL ELEMENTS, AND ELECTROCHEMICAL ELEMENT**

(30) Priority: 25.12.2020 JP 2020217985
(71) Applicant: Zeon Corporation, Tokyo 100-8246 (JP)
(72) Inventor: NAKAI Akito, Tokyo 100-8246 (JP); ASAI Kazuki, Tokyo 100-8246 (JP)
(74) Representative: Maiwald GmbH
(86) International application number: PCT/JP2021/043703
(87) International publication number: WO 2022/138004

(57) **Abstract**

Disclosed is a composition for an electrochemical device positive electrode. The composition enables metal capturing within a positive electrode mixed material layer and makes it possible to provide a positive electrode capable of improving the electrical characteristics of an electrochemical device. The composition comprises a copolymer A that comprises a sulfo group-containing monomer unit in an amount of 10% by mass or more and 40% by mass or less and a nitrile group-containing monomer unit in an amount of 10% by mass or more and 45% by mass or less.

## Description

### TECHNICAL FIELD

The present disclosure relates to a composition for an electrochemical device positive electrode, a slurry composition for an electrochemical device positive electrode, a positive electrode for an electrochemical device, and an electrochemical device.

### BACKGROUND

Electrochemical devices such as lithium-ion secondary batteries, lithium-ion capacitors, and electric double layer capacitors have heretofore been used in a wide range of applications for their small size, light weight, high energy density, and capability of repetitive charge/discharge cycles. For example, a lithium-ion secondary battery usually includes battery members such as electrodes (positive and negative electrodes) and a separator that separates the positive and negative electrodes from each other. The electrode usually includes a current collector and an electrode mixed material layer formed on the current collector. Such an electrode mixed material layer, e.g., a positive electrode mixed material layer, is usually formed by applying a positive electrode slurry on a current collector and drying the slurry. The slurry comprises in a dispersion medium a positive electrode active material as well as a conductive material for improving conductivity and a binder for binding these components. Conventionally, polyvinylidene fluoride (PVDF) or other polymer is used as the binder used for forming the positive electrode mixed material layer.

In recent years, attempts have therefore been made to improve electrode binder compositions and electrode slurry compositions used for forming electrode mixed material layers in order to achieve improvements in the performance of electrochemical devices (see, e.g., PTLS 1 to 3).

### CITATION LIST

### Patent Literature

PTL 1: JP2012-185974A
PTL 2: JP2009-004222A
PTL 3: WO2014/185072

### SUMMARY

### (Technical Problem)

However, in lithium-ion batteries or other batteries, transition metals such as nickel, cobalt, and manganese that have been eluted from the positive electrode active material due to degradation of the positive electrode active material associated with charge/discharge cycles and/or due to hydrogen fluoride derived from PVDF may be eluted as ions in the electrolyte solution and precipitate on the negative electrode to degrade the electrical characteristics of the lithium-ion secondary battery.

It would therefore be helpful to provide a composition for an electrochemical device positive electrode, which can provide a positive electrode that enables metal capturing in the positive electrode mixed material layer and improves the electrical characteristics of an electrochemical device.

It would also be helpful to provide a slurry composition for an electrochemical device positive electrode, which can improve the electrical characteristics of an electrochemical device.

It would also be helpful to provide a positive electrode for an electrochemical device, which can improve the electrical characteristics of an electrochemical device, and an electrochemical device having excellent electrical characteristics.

### (Solution to Problem)

The inventors conducted diligent investigation with the aim of solving the problems described above. The inventors then established that when a copolymer A that comprises a sulfo group-containing monomer unit and a nitrile group-containing monomer unit in amounts that fall within respective specific ranges is blended in a positive electrode mixed material layer, transition metal ions derived from the positive electrode active material can be favorably captured while protecting the positive electrode active material, and the electrical characteristics of an electrochemical device can be improved. The inventors thus completed the present disclosure.

That is, the present disclosure is intended to advantageously solve the above problem, and the disclosed the composition for an electrochemical device positive electrode comprises a copolymer A comprising a sulfo group-containing monomer unit in an amount of 10% by mass or more and 40% by mass or less and a nitrile group-containing monomer unit in an amount of 10% by mass or more and 45% by mass or less. When a positive electrode for an electrochemical device is manufactured using such a composition that comprises a copolymer A comprising a sulfo group-containing monomer unit in an amount of 10% by mass or more and 40% by mass or less and a nitrile group-containing monomer unit in an amount of 10% by mass or more and 45% by mass or less, it is possible to favorably capture transition metal ions derived from the positive electrode active material while protecting the positive electrode active material in the positive electrode mixed material layer, and improve the electrical characteristics such as high-temperature cycle characteristics and high-temperature storage characteristics of the electrochemical device.

In the disclosed composition for an electrochemical device positive electrode, it is preferred that the copolymer A has a glass transition temperature of -5°C or higher. When the glass transition temperature of the copolymer A is -5°C or higher, the high-temperature cycle characteristics of an electrochemical device can be further improved.

In the present disclosure, the glass transition temperature of the copolymer A can be measured by the method described in Examples.

In the disclosed composition for an electrochemical device positive electrode, it is preferred that the copolymer A further comprises a (meth)acrylic acid alkyl ester monomer unit having an alkyl chain having 4 to 10 carbon atoms in an amount of 30% by mass or more and 65% by mass or less. When the copolymer A further comprises an (meth)acrylic acid alkyl ester monomer unit having an alkyl chain having 4 to 10 carbon atoms in an amount of 30% by mass or more and 65% by mass or less, the high-temperature storage characteristics of an electrochemical device can be further improved.

As used herein, the term "(meth)acryl" refers to "acryl" and/or "methacryl."

It is preferred that the disclosed composition for an electrochemical device positive electrode further comprises water and has a pH of less than 7. When the pH is less than 7, the high-temperature cycle characteristics of an electrochemical device can be further improved.

In the disclosed composition for an electrochemical device positive electrode, it is preferred that the sulfo group-containing monomer unit of the copolymer is a 2-acrylamido-2-methylpropanesulfonic acid monomer unit. When the sulfo group-containing monomer unit is a 2-acrylamido-2-methylpropanesulfonic acid monomer unit, the high-temperature cycle characteristics of an electrochemical device can be further improved.

The present disclosure is intended to advantageously solve the above problem, and the disclosed slurry composition for an electrochemical device positive electrode comprises any of the above-described compositions for an electrochemical device positive electrode, a fluorine-containing polymer, a positive electrode active material, and a conductive material. When such a slurry composition for an electrochemical device positive electrode that comprises any of the above-described compositions for an electrochemical device positive electrode is used, it is possible to obtain a positive electrode that allows an electrochemical device to have excellent high-temperature cycle characteristics and high-temperature storage characteristics.

In the disclosed slurry composition for an electrochemical device positive electrode, the content of the copolymer A is preferably 0.05 parts by mass or more and 0.5 parts by mass or less per 100 parts by mass of the positive electrode active material. When the content of the copolymer A falls within the above range, the high-temperature cycle characteristics and high-temperature storage characteristics of an electrochemical device can be further improved.

Also, the present disclosure is intended to advantageously solve the above problems, and the disclosed positive electrode for an electrochemical device comprises a positive electrode mixed material layer formed using any of the above-described slurry compositions for an electrochemical device positive electrode. Such a positive electrode that comprises a positive electrode mixed material layer formed using any of the above-described slurry compositions for an electrochemical device positive electrode can allow an electrochemical device to have excellent high-temperature cycle characteristics and high-temperature storage characteristics.

Also, the present disclosure is intended to advantageously solve the above problems, and the disclosed electrochemical device comprises the positive electrode for an electrochemical device described above. When such a positive electrode for an electrochemical device is used, an electrochemical device can be obtained that has excellent high-temperature cycle characteristics and high-temperature storage characteristics.

### (Advantageous Effect)

According to the present disclosure, it is possible to provide a composition for an electrochemical device positive electrode, which can provide a positive electrode that enables metal capturing in the positive electrode mixed material layer and improves the electrical characteristics of an electrochemical device.

According to the present disclosure, it is also possible to provide a slurry composition for an electrochemical device positive electrode, which can improve the electrical characteristics of an electrochemical device.

According to the present disclosure, it is also possible to provide a positive electrode for an electrochemical device, which can improve the electrical characteristics of an electrochemical device, and an electrochemical device having excellent electrical characteristics.

### DETAILED DESCRIPTION

The following provides a detailed description of embodiment(s) of the present disclosure.

The disclosed composition for an electrochemical device positive electrode can be used when preparing the disclosed slurry composition for an electrochemical device positive electrode. The disclosed slurry composition for an electrochemical device positive electrode is used when forming the disclosed positive electrode for an electrochemical device. The disclosed positive electrode for an electrochemical device is manufactured using the disclosed slurry composition for an electrochemical device positive electrode and constitutes a part of the disclosed electrochemical device. The disclosed electrochemical device comprises the disclosed positive electrode for an electrochemical device.

### (Composition for Electrochemical Device Positive Electrode)

The disclosed composition for an electrochemical device positive electrode comprises a copolymer A that comprises a sulfo group-containing monomer unit in an amount of 10% by mass or more and 40% by mass or less and a nitrile group-containing monomer unit in an amount of 10% by mass or more and 45% by mass or less, and optionally further comprises water and/or an organic solvent. In addition, the disclosed composition for an electrochemical device positive electrode may optionally further comprise other components such as additives.

The form of the disclosed composition for an electrochemical device positive electrode is not particularly limited; the composition may be in the form of an aqueous dispersion in which the copolymer A is dispersed in water or in the form of an organic solvent solution in which the copolymer A is dissolved or dispersed in an organic solvent. When the composition for an electrochemical device positive electrode is used for preparing a slurry composition for an electrochemical device positive electrode, the composition is preferably in the form of an organic solvent solution.

Because the disclosed composition for an electrochemical device positive electrode comprises the above-described copolymer A, it is possible to improve the electrical characteristics of an electrochemical device that comprises a positive electrode obtained by using the composition. The underlying mechanism for this is not necessarily clear, but is presumed to be as follows:
The sulfo group of the sulfo group-containing monomer unit of the copolymer A adsorbs and captures transition metal ions derived from the positive electrode active material. This would prevent the formation of dendrites caused by the precipitation of the transition metal ions on the negative electrode of the electrochemical device to improve the high-temperature cycle characteristics of the electrochemical device. In addition, the nitrile group of the nitrile group-containing monomer unit of the copolymer A protects the surface of the positive electrode active material. This would prevent possible side reactions in the positive electrode mixed material layer to improve the high-temperature storage characteristics of the electrochemical device. Therefore, providing an electrochemical device with a positive electrode formed using the disclosed composition for an electrochemical device positive electrode would make it possible to impart excellent electrical characteristics to the electrochemical device.

In the present disclosure, examples of transition metals that can be captured by the copolymer A include, but not limited to, manganese (Mn), iron (Fe), cobalt (Co), nickel (Ni), and copper (Cu). Representative examples are cobalt and nickel.

### <Copolymer A>

The copolymer A used in the disclosed composition for an electrochemical device positive electrode comprises a sulfo group-containing monomer unit in an amount of 10% by mass or more and 40% by mass or less and a nitrile group-containing monomer unit in an amount of 10% by mass or more and 45% by mass or less, and may optionally comprise other monomer units (repeating units) other than the sulfo group-containing monomer unit and the nitrile group-containing monomer unit.

The phrase "comprise a monomer unit" as used herein means that "a polymer obtained using a monomer comprises a repeating unit derived from that monomer."

The following describes the sulfo group-containing monomer unit, the nitrile group-containing monomer unit, and other optional monomer units included in the copolymer A.

### [Sulfo Group-Containing Monomer Unit]

Examples of sulfo group-containing monomers capable of forming the sulfo group-containing monomer unit include ethylenically unsaturated sulfonic acids such as vinylsulfonic acid, methylvinylsulfonic acid, styrenesulfonic acid, allylsulfonic acid, and methallylsulfonic acid; ethyl (meth)acrylate-2-sulfonate; sulfobis-(3-sulfopropyl)itaconic acid ester; 3-allyloxy-2-hydroxypropanesulfonic acid; and 2-acrylamido-2-methylpropanesulfonic acid. Preferred is 2-acrylamido-2-methylpropanesulfonic acid from the viewpoint of further improving the transition metal ion capturing ability of the copolymer A to further improve the high-temperature cycle characteristics of the electrochemical device. One of these sulfo group-containing monomers may be used alone or two or more of them may be used in combination.

The content of the sulfo group-containing monomer unit in the copolymer A, when the content of the total monomer units in the copolymer A is taken as 100% by mass, is required to be 10% by mass or more, preferably 12% by mass or more, more preferably 15% by mass or more, still more preferably 18% by mass or more, particularly preferably 20% by mass or more, and is also required to be 40% by mass or less, preferably 38% by mass or less, more preferably 33% by mass or less, still more preferably 30% by mass or less. When the content of the sulfo group-containing monomer unit in the copolymer A is less than the lower limit, the transition metal ion capturing ability of the copolymer A cannot be secured, so that the high-temperature cycle characteristics of the electrochemical device deteriorates. On the other hand, when the content of the sulfo group-containing monomer unit in the copolymer A exceeds the above upper limit, the dispersibility of components in a slurry composition for an electrochemical device positive electrode that comprises the copolymer A cannot be ensured, so that the electrical characteristics of the electrochemical device that comprises a positive electrode manufactured using the slurry composition deteriorates.

### [Nitrile Group-Containing Monomer Unit]

Examples of nitrile-group containing monomers that can be used to form the nitrile group-containing monomer unit include α,β-ethylenically unsaturated nitrile monomers.α,β-Ethylenically unsaturated nitrile monomers are not particularly limited as long as they are α,β-ethylenically unsaturated compounds having a nitrile group. Examples thereof include acrylonitrile; α-halogenoacrylonitriles such as α-chloroacrylonitrile and α-bromoacrylonitrile; and α-alkylacrylonitriles such as methacrylonitrile and α-ethylacrylonitrile. Preferred from the viewpoint of favorably protecting the positive electrode active material are acrylonitrile and methacrylonitrile, with acrylonitrile being more preferred. One of these nitrile-group containing monomers may be used alone or two or more of them may be used in combination.

The content of the nitrile-group-containing monomer unit in the copolymer A, when the content of the total monomer units in the copolymer A is taken as 100% by mass, is required to be 10% by mass or more, preferably 12% by mass or more, more preferably 18% by mass or more, still more preferably 20% by mass or more, and is also required to be 45% by mass or less, preferably 42% by mass or less, more preferably 40% by mass or less, still more preferably 38% by mass or less. When the content of the nitrile group-containing monomer unit in the copolymer A is less than the lower limit, the ability of the copolymer A to protect the positive electrode active material cannot be secured, so that the high-temperature storage characteristics of the electrochemical device deteriorates. In addition, when the content of the nitrile group-containing monomer unit in the copolymer A is less than the lower limit, the solubility of the copolymer A in solvent decreases, so that the dispersibility of the components of a slurry composition for an electrochemical device positive electrode that comprises the copolymer A cannot be ensured, and hence the electrical characteristics of an electrochemical device that comprises a positive electrode manufactured using the slurry composition deteriorates. On the other hand, when the content of the nitrile group-containing monomer unit in the copolymer A exceeds the above upper limit, the polymer hardens as its crystallinity increases, and hence the high-temperature cycle characteristics of the electrochemical device deteriorates.

### [Other Monomer Units]

Examples of other monomer units to be optionally included in the copolymer other than the sulfo group-containing monomer unit and the nitrile group-containing monomer unit include an (meth)acrylic acid alkyl ester monomer unit and an acid group-containing monomer unit other than the sulfo group-containing monomer unit.

### [[(Meth)acrylic Acid Alkyl Ester Monomer Unit]]

Examples of usable (meth)acrylic acid alkyl ester monomers capable of forming the (meth)acrylic acid alkyl ester monomer unit optionally included in the copolymer A include acrylic acid alkyl esters and methacrylic acid alkyl esters. Specific examples of these monomers include those described in WO2013/080989.

Preferred are (meth)acrylic acid alkyl ester monomers having an alkyl chain having 4 to 10 carbon atoms, such as butyl (meth)acrylate, pentyl (meth)acrylate, hexyl (meth)acrylate, heptyl (meth)acrylate, octyl (meth)acrylate, 2-ethylhexyl (meth)acrylate, nonanyl (meth)acrylate, and decanyl (meth)acrylate, with butyl acrylate and 2-ethylhexyl acrylate being more preferred, and butyl acrylate being particularly preferred. One of these (meth)acrylic acid alkyl ester monomers may be used alone or two or more of them may be used in combination.

When the copolymer A comprises the (meth)acrylic acid alkyl ester monomer unit, the flexibility of the copolymer A can be further improved, and the high-temperature storage characteristics of an electrochemical device can be further improved.

The content of the (meth)acrylic acid alkyl ester monomer unit in the copolymer A, when the content of the total monomer units in the copolymer A is taken as 100% by mass, is preferably 30% by mass or more, more preferably 35% by mass or more, still more preferably 40% by mass or more, and is preferably 65% by mass or less, more preferably 63% by mass or less, still more preferably 55% by mass or less. When the content of the (meth)acrylic acid alkyl ester monomer unit is 30% by mass or more, the flexibility of the copolymer A can be favorably secured, and the high-temperature storage characteristics of the electrochemical device can be further improved. On the other hand, when the content of the (meth)acrylic acid alkyl ester monomer unit is 65% by mass or less, it is possible to favorably prevent the glass transition temperature of the copolymer A from becoming too low to deteriorate the high-temperature cycle characteristics of the electrochemical device.

### [Acid Group-Containing Monomer Units Other Than Sulfo Group-Containing Monomer Unit]

Acid group-containing monomer units other than the sulfo group-containing monomer units are not particularly limited as long as they are monomer units having an acid group other than sulfo group, and examples thereof include a carboxylic acid group-containing monomer unit and a phosphate group-containing monomer unit.

Examples of carboxylic acid group-containing monomers capable of forming the carboxylic acid group-containing monomer unit include monocarboxylic acids, dicarboxylic acids, and salts (sodium salt, lithium salt, and the like) thereof. Examples of monocarboxylic acids include acrylic acid, methacrylic acid, and crotonic acid. Examples of dicarboxylic acids include maleic acid, fumaric acid, and itaconic acid. One of these carboxylic acid group-containing monomers may be used alone or two or more of them may be used in combination.

Examples of phosphate group-containing monomers capable of forming the phosphate group-containing monomer unit include 2-(meth)acryloyloxy ethyl phosphate, methyl-2-(meth)acryloyloxyethyl phosphate, ethyl-(meth) acryloyloxyethyl phosphate, and salts (sodium salt, lithium salt, and the like) thereof. One of these phosphate group-containing monomers may be used alone or two or more of them may be used in combination.

The term "(meth)acryloyl" as used herein refers to "acryloyl" and/or "methacryloyl."

Preferred acid group-containing monomers other than sulfo group-containing monomers are carboxylic acid group-containing monomers, with acrylic acid, methacrylic acid, itaconic acid, and maleic acid being more preferred, and methacrylic acid being further preferred from the viewpoint of its copolymerizability with other monomers used for producing the copolymer A.

The content of the acid group-containing monomer unit other than the sulfo group-containing monomer unit in the copolymer A, when the content of the total monomer units in the copolymer A is taken as 100% by mass, is preferably 0.1% by mass or more, more preferably 0.3% by mass or more, still more preferably 0.5% by mass or more, and is preferably 2.0% by mass or less, more preferably 1.0% by mass or less.

### [Ratio of Sulfo Group]

The ratio of the sulfo group to the total acid groups (sulfo group/acid group) in the copolymer A is not limited, but is preferably 80% by mass or more, more preferably 90% by mass or more, still more preferably 95% by mass or more, and particularly preferably 97% by mass or more. When the ratio of the sulfo group to the total acid groups is 80% by mass or more, the transition metal ion capturing ability of the copolymer A can be further improved, and the high-temperature cycle characteristics of the electrochemical device can be further improved.

### [Glass Transition Temperature]

The glass transition temperature (°C) of the copolymer A is preferably -5°C or higher, more preferably 5°C or higher, still more preferably 10°C or higher, and is preferably 100°C or lower, more preferably 70°C or lower, still more preferably 55°C or lower. When the glass transition temperature of the copolymer A is -5°C or higher, it may prevent deterioration of high-temperature cycle characteristics due to a decrease in the transition metal ion capturing ability, which is caused by increased mobility of molecular ends of the copolymer A when the electrochemical device is subjected to high-temperature charge-discharge cycles. On the other hand, when the glass transition temperature of the copolymer A is 100°C or lower, it may prevent the copolymer A from becoming too hard to prevent deterioration of the high-temperature storage characteristics of the electrochemical device.

### [Weight Average Molecular Weight]

The weight average molecular weight of the copolymer A is preferably 50,000 or more, more preferably 70,000 or more, still more preferably 100,000 or more, and is preferably 1,000,000 or less, more preferably 900,000 or less, still more preferably 700,000 or less.

When the weight average molecular weight of the copolymer A is within the above range, the dispersibility of the copolymer A in the slurry composition for an electrochemical device positive electrode can be further improved, and the high-temperature cycle characteristics of the electrochemical device can be further improved.

In the present disclosure, the weight average molecular weight of the copolymer A can be measured by the method described in Examples.

### [Degree of Swelling in Electrolyte Solution]

The copolymer A preferably has a degree of swelling in electrolyte solution of 1.2 times or more and is preferably 5 times or less, more preferably 4 times or less, still more preferably 3 times or less. When the degree of swelling in electrolyte solution is 1.2 times or more, the copolymer A has a suitable degree of swelling in electrolyte solution, so that it is possible to secure electrical characteristics such as high-temperature cycle characteristics in the electrochemical device manufactured using a slurry composition for an electrochemical device positive electrode containing the copolymer A. When the degree of swelling in electrolyte solution is 5 times or less, it is possible to suppress dissolution of the copolymer A into the electrolyte solution when a positive electrode for an electrochemical device manufactured using a slurry composition containing the copolymer A is used in an electrochemical device, so that it is possible to prevent reduction in the peel strength of the positive electrode and the cycle characteristics of the electrochemical device. The degree of swelling in electrolyte solution of the copolymer A can be appropriately adjusted by changing the preparation conditions of the copolymer A (e.g., monomers to be used, polymerization conditions).

The degree of swelling in electrolyte solution of the copolymer A can be measured in the manner described below.

First, a 8% by mass copolymer A solution in N-methylpyrrolidone (NMP) is poured into a Teflon^{®} (Teflon is a registered trademark in Japan, other countries, or both) petri dish and dried to prepare a polymer film having a thickness of 100 µm. A circular sample having a diameter of 16 mm is punched out from the polymer film and the weight of the sample is measured (weight A). Next, a non-aqueous electrolyte solution (1.0M LiPF₆ solution with a 3:7 (weight ratio) mixed solvent of ethylene carbonate and ethyl methyl carbonate blended with 5% by mass of fluoroethylene carbonate and as an additive 2% by volume of vinylene carbonate) is prepared. Then, the circular sample is immersed in 20 g of the non-aqueous electrolyte solution at 60°C for 72 hours. The swollen circular sample is then taken out, the nonaqueous electrolyte solution on the surface of the sample is lightly wiped off, and the weight of the sample is measured (weight B). Using the measured values of weight A and weight B, the degree of swelling in electrolyte solution (=B/A) is obtained. The larger the obtained value, the easier for the copolymer A to swell in the electrolyte solution and the larger the deformation amount of the copolymer A.

### [Method for Producing Copolymer A]

The copolymer A can be produced by any method known in the art such as, for example, solution polymerization, suspension polymerization, bulk polymerization, or emulsification polymerization. Of these methods, emulsion polymerization that uses an emulsifier is preferred.

Moreover, the polymerization method may be addition polymerization such as ionic polymerization, radical polymerization, or living radical polymerization. Any polymerization initiator known in the art can be used, e.g., those described in JP2012-184201A.

### <Organic Solvent>

The organic solvent used in the disclosed composition for an electrochemical device positive electrode can be an organic solvent having a polarity that allows the copolymer A and a fluorine-containing polymer to be described later to be dispersed or dissolved in the organic solvent.

Specifically, as the organic solvent, acetonitrile, N-methylpyrrolidone, acetylpyridine, cyclopentanone, dimethylformamide, dimethyl sulfoxide, methylformamide, methyl ethyl ketone, furfural, ethylenediamine, or the like may be used. Of these solvents, the organic solvent is most preferably N-methylpyrrolidone from the viewpoint of ease of handling, safety, and ease of synthesis.

### <Other Components>

In addition to the components described above, other components such as viscosity modifiers, reinforcing materials, antioxidants, and electrolyte additives having a function of suppressing the decomposition of electrolytes may be mixed with the disclosed composition. These other components may be those known in the art.

### <pH of Composition for Electrochemical Device Positive Electrode>

When the composition for an electrochemical device positive electrode comprising the copolymer A is an aqueous dispersion, the pH of the composition is preferably less than 7, more preferably 6 or less, still more preferably 5 or less. When the pH of the composition is less than 7, the copolymer A has a free sulfo group, and thus transition metal ions can be more firmly captured. This makes allows the high-temperature cycle characteristics of the electrochemical device to be further improved. Further, even when a positive electrode active material containing a residual alkali component as described later is used, the free sulfo group strongly reacts with the alkali component derived from the positive electrode active material, so that it is possible to suppress the generation, caused by such alkali components, of gels and aggregates in the slurry composition for an electrochemical device positive electrode.

From the viewpoint of preventing excessive increases in the viscosity of the aqueous dispersion, the aqueous dispersion preferably has a pH of 0.5 or more, more preferably 1 or more.

The pH can be adjusted for example by changing the amounts of the acid group-containing monomers such as the sulfo group-containing monomer to be blended in a monomer composition used for producing the copolymer A or by adding a base as a neutralizing agent to the aqueous dispersion of the obtained copolymer A. Examples of bases include, but are not limited to, lithium compounds such as lithium hydroxide, lithium carbonate, and lithium hydrogencarbonate; ammonia; sodium hydroxide; potassium hydroxide; and amines. Among these, weak bases such as lithium hydroxide, ammonia, and primary amines are preferably used. This is because, when a strong base is used, the sulfo group is excessively neutralized and does not exhibit acidity, resulting in concern that the transition metal ion capturing ability of the copolymer A is reduced or lost.

### <Method for Producing Composition for Electrochemical Device Positive Electrode>

As described above, the disclosed composition for an electrochemical device positive electrode may be in the form of an aqueous dispersion in which the copolymer A is dispersed in water, or in the form of an organic solvent solution in which the copolymer A is dissolved or dispersed in an organic solvent.

An aqueous dispersion of the copolymer A can generally be obtained by polymerizing in water a monomer composition obtained by blending the above-described monomers at desired ratios, and optionally adjusting the pH of the aqueous dispersion and/or adding other components. The content of each monomer in the monomer composition can be determined in accordance with the content of each monomer unit and structural unit (repeating unit) in the resulting copolymer A.

The organic solvent solution containing the copolymer A is not particularly limited and can be obtained by replacing the water of the aqueous dispersion obtained as described above with an organic solvent and then optionally adding other components.

Water can be replaced with an organic solvent for example by adding such an organic solvent having a boiling point higher than that of water, and then evaporating the total volume of water and part of the organic solvent under reduced pressure. Upon replacement of water with organic solvent, residual monomers may be removed simultaneously by evaporating them along with water. When replacement of water with organic solvent and the removal of residual monomers are simultaneously performed, a slurry composition for an electrochemical device positive electrode can be efficiently produced.

### (Slurry Composition for Electrochemical Device Positive Electrode)

The disclosed slurry composition for an electrochemical device positive electrode comprises the above-described composition for an electrochemical device positive electrode, a positive electrode active material, a conductive material, and a fluorine-containing polymer. Specifically, the disclosed slurry composition for an electrochemical device positive electrode comprises the copolymer A, a positive electrode active material, a conductive material, and a fluorine-containing polymer, and optionally further comprises at least one selected from the group consisting of water, an organic solvent, and other components. Because the disclosed slurry composition comprises the copolymer A, in a positive electrode mixed material layer formed from the slurry composition, the positive electrode active material is protected and also transition metal ions derived from the positive electrode active material can be captured. Thus, the electrochemical device can exhibit excellent electrical characteristics. In the positive electrode formed using the slurry composition, the fluorine-containing polymer mainly functions as a binder, and the copolymer A mainly functions as a component responsible for protection of the positive electrode active material and capture of transition metal ions.

### <Content of Copolymer A>

The content of the copolymer A in the disclosed slurry composition for an electrochemical device positive electrode is preferably 0.05 parts by mass or more, more preferably 0.08 parts by mass or more, still more preferably 0.12 parts by mass or more, particularly preferably 0.3 parts by mass or more, and is preferably 0.5 parts by mass or less, more preferably 0.45 parts by mass or less, still more preferably 0.4 parts by mass or less, in terms of solid content, per 100 parts by mass of the positive electrode active material. When the content of the copolymer A is equal to or higher than the lower limit, transition metal ions can be favorably captured while favorably protecting the positive electrode active material in the positive electrode mixed material layer, and the high-temperature cycle characteristics and high-temperature storage characteristics of the electrochemical device can be further improved. When the content of the copolymer A is equal to or less than the upper limit, binding of the positive electrode active material and other components can be sufficiently secured, and the electrical characteristics of the electrochemical device can be further improved.

### <Ratio of Blending Amount of Copolymer A to Blending Amount of Fluorine-Containing Polymer>

In the disclosed slurry composition for an electrochemical device positive electrode, the value obtained by dividing the blending amount of the copolymer A by the blending amount of the fluorine-containing polymer (copolymer A / fluorine-containing polymer) is preferably 0.01 or more, more preferably 0.05 or more, still more preferably 0.1 or more, particularly preferably 0.2 or more, and is preferably 0.5 or less, more preferably 0.45 or less, still more preferably 0.4 or less. By setting the above value to 0.01 or more, transition metal ions can be favorably captured while the positive electrode active material is favorably protected in the positive electrode mixed material layer, whereby the high-temperature cycle characteristics and high-temperature storage characteristics of the electrochemical device can be further improved. By setting the above value to 0.5 or less, the amount of the fluorine-containing polymer as a binder is sufficiently secured, thereby preventing the positive electrode active material and other components from falling off the positive electrode mixed material layer and thus further improving the electrical characteristics of the electrochemical device.

### <Positive Electrode Active Material>

The positive electrode active material to be blended in the slurry composition for an electrochemical device positive electrode is not particularly limited and any positive electrode active material known in the art can be used. Specific examples of positive electrode active materials include transition metal-containing compounds, such as transition metal oxides, transition metal sulfides, and composite metal oxides containing lithium and a transition metal. Examples of transition metals include Ti, V, Cr, Mn, Fe, Co, Ni, Cu, and Mo.

For example, the positive electrode active material used in a lithium-ion secondary battery is not particularly limited, and examples thereof include lithium-containing cobalt oxide (LiCoO₂), lithium manganate (LiMn₂O₄), lithium-containing nickel oxide (LiNiO₂), Co-Ni-Mn lithium-containing composite oxide, Ni-Mn-Al lithium-containing composite oxide, Ni-Co-Al lithium-containing composite oxide, olivine-type lithium iron phosphate (LiFePO₄), olivine-type lithium manganese phosphate (LiMnPO₄), Li₁₊ₓMn₂₋ₓO₄(0<X<2), lithium-excess spinel compounds represented by Li [Ni_{0.17}Li_{0.2}Co_{0.07}Mn_{0.56}]O₂, and LiNi_{0.5}Mn_{1.5}O₄.

Examples of positive electrode active materials that can be used in a lithium-ion capacitor or an electric double-layer capacitor include, but are not specifically limited to, carbon allotropes. Specific examples of carbon allotropes that may be used include activated carbon, polyacene, carbon whisker, and graphite. Moreover, powder or fiber of such carbon allotropes may be used.

Among the above, from the viewpoint of improving the battery capacity in the lithium-ion secondary battery, it is preferable to use, as the positive electrode active material, a positive electrode active material that contains at least one of Ni, Mn and Co, such as Co-Ni-Mn lithium-containing complex oxides. Specifically, LiNiO₂, LiMn₂O₄, lithium-rich spinel compound, LiMnPO₄, Li[Ni_{0.5}Co_{0.2}Mn_{0.3}]O₂, Li[Ni_{1/3}Co_{1/3}Mn_{1/3}]O₂, Li[Ni_{0.17}Li_{0.2}Co_{0.07}Mn_{0.56}]O₂, LiNi_{0.5}Mn_{1.5}O₄, Li[Ni_{0.6}Co_{0.2}Mn_{0.2}]O₂, Li[Ni_{0.8}Co_{0.1}Mn_{0.1}]O₂ or the like is preferably used as the positive electrode active material, with LiNiO₂, Li[Ni_{0.5}Co_{0.2}Mn_{0.3}]O₂, Li[Ni_{1/3}Co_{1/3}Mn_{1/3}]O₂, Li[Ni_{0.6}Co_{0.2}Mn_{0.2}]O₂, Li[Ni_{0.8}Co_{0.1}Mn_{0.1}]O₂ or the like being preferred, and Li[Ni_{0.8}Co_{0.1}Mn_{0.1}]O₂ being particularly preferred.

The particle size of the positive electrode active material is not particularly limited and can be the same as that of positive electrode active materials conventionally used in the art.

In the positive electrode active material that comprises at least one of Co, Mn and Ni, there remains alkali components such as lithium carbonate (Li₂CO₃) or lithium hydroxide (LiOH) used for their production. Therefore, when such a positive electrode active material is used, gels or aggregates are easily generated in the slurry composition due to the alkali components. In particular, because high nickel content positive electrode active materials such as Li[Ni_{0.8}Co_{0.1}Mn_{0.1}]O₂ have a high residual alkali content, they easily cause gels or aggregates in the slurry composition. In contrast, in the disclosed slurry composition, the sulfo group of the copolymer A reacts with these alkali components to suppress the generation of gels and aggregates. Therefore, in the present disclosure, even when such a positive electrode active material is used, the dispersibility of the components of the slurry composition can be improved, and therefore, the electrical characteristics of an electrochemical device that comprises a positive electrode manufactured using such a slurry composition can be improved.

### <Conductive Material>

The conductive material ensures electrical contacts among positive electrode active materials. The conductive material is not particularly limited and any conductive material known in the art can be used. Specific examples of conductive materials include conductive carbon materials such as acetylene black, Ketjenblack^{®} (Ketjenblack is a registered trademark in Japan, other countries, or both), furnace black, graphite, carbon fibers, carbon flakes, and carbon nanofibers (e.g., carbon nanotubes or vapor-grown carbon fibers); and fibers and foils of various metals. Among these, from the viewpoint of improving electrical contacts among positive electrode active materials to improve the electrical characteristics of an electrochemical device that comprises a positive electrode for an electrochemical device formed using the slurry composition, it is preferable to use acetylene black, Ketjenblack^{®} or furnace black as the conductive material, and it is particularly preferable to use acetylene black.

One of these conductive materials may be used alone or two or more of them may be used in combination.

The blending amount of the conductive material is preferably 0.1 parts by mass or more, more preferably 1.2 parts by mass or more, still more preferably 2.5 parts by mass or more, and is preferably 3 parts by mass or less, more preferably 2.8 parts by mass or less, per 100 parts by mass of the positive electrode active material. When the blending amount of the conductive material is 0.1 parts by mass or more per 100 parts by mass of the positive electrode active material, the electrical contact between the positive electrode active materials can be sufficiently secured, and the electrical characteristics of the electrochemical device can be sufficiently secured. On the other hand, when the blending amount of the conductive material is 3 parts by mass or less per 100 parts by mass of the positive electrode active material, it is possible to prevent a decrease in the stability of the slurry composition and a decrease in the density of the positive electrode mixed material layer in the positive electrode of the electrochemical device, thus sufficiently increasing the capacity of the electrochemical device.

### <Fluorine-Containing Polymer >

The fluorine-containing polymer contained in the disclosed slurry composition functions, in a positive electrode manufactured by forming a positive electrode mixed material layer on a current collector using the slurry composition, as a binder capable of retaining components contained in the positive electrode mixed material layer so that they are not separated from the positive electrode mixed material layer. By using a fluorine-containing polymer that can function as a binder, adhesion between the positive electrode mixed material layer formed from the slurry composition and the current collector can be ensured, so that the electrical characteristics of the electrochemical device can be improved.

The fluorine-containing polymer is a polymer that comprises a fluorine-containing monomer unit. Specifically, examples of the fluorine-containing polymer include homopolymers or copolymers of one or more fluorine-containing monomers, and copolymers of one or more fluorine-containing monomers and monomers containing no fluorine (hereinafter, referred to as "fluorine-free monomers").

The proportion of the fluorine-containing monomer unit in the fluorine-containing polymer is usually 70% by mass or more, preferably 80% by mass or more. The proportion constituted by a fluorine-free monomer unit in the fluorine-containing polymer is usually 30% by mass or less, preferably 20% by mass or less.

Examples of fluorine-containing monomers that can be used to form the fluorine-containing monomer unit include vinylidene fluoride, tetrafluoroethylene, hexafluoropropylene, trifluorovinyl chloride, vinyl fluoride, and perfluoroalkyl vinyl ethers. Of these fluorine-containing monomers, vinylidene fluoride is preferred.

Preferred fluorine-containing polymers are those prepared using vinylidene fluoride as the fluorine-containing monomer and those prepared using vinyl fluoride as the fluorine-containing monomer, with polymers prepared using vinylidene fluoride as the fluorine-containing monomer being more preferred.

Specifically, preferred fluorine-containing polymers are homopolymers of vinylidene fluoride (polyvinylidene fluoride (PVDF)), copolymers of vinylidene fluoride and hexafluoropropylene, and polyvinyl fluoride, with polyvinylidene fluoride (PVDF) being more preferred.

One of these fluorine-containing polymers may be used alone, or two or more of them may be used in combination.

PVDF is a compound that is unstable against basic compounds. As such, particularly when a high nickel content positive electrode active material such as that described above is used, PVDF is easily decomposed by the alkali components remaining in such a positive electrode active material to produce hydrogen fluoride. The produced hydrogen fluoride reacts with the positive electrode active material to cause transition metal ions to be eluted from the positive electrode active material. In contrast, in the present disclosure, because the sulfo group of the copolymer A reacts with the alkali components as described above, PVDF is prevented from reacting with the alkali components. As a consequence, elution of transition-metal ions from the positive electrode active material caused by hydrogen fluoride derived from PVDF is suppressed.

Therefore, in the present disclosure, for example, even when an electrochemical device is manufactured using a slurry composition for an electrochemical device positive electrode that comprises a high nickel content positive electrode active material and PVDF as a binder, for example, deposition of transition-metal ions on the negative electrode in the electrochemical device is suppressed, thus improving the electrochemical characteristics of the electrochemical device.

In addition, PVDF usually gels upon reaction with the alkali components described above. As such, particularly when the slurry composition comprises a high nickel content positive electrode active material and PVDF as a binder, PVDF reacts with the alkali components derived from the positive electrode active material to generate aggregates or gels in the slurry composition that easily lower the dispersibility of the components in the slurry composition. In contrast, because the disclosed slurry composition for an electrochemical device positive electrode comprises the copolymer A, the sulfo group of the copolymer A reacts with the alkali components to prevent PVDF from reacting with the alkali components. As a result, generation of aggregates or gels in the slurry composition is suppressed. Thus, even when a high nickel content positive electrode active material is used and PVDF is used as a binder, generation of aggregates and gels in the slurry composition is suppressed to improve dispersibility. The electrochemical device that comprises a positive electrode produced by using the slurry composition can therefore have improved electrical characteristics.

Methods for producing the fluorine-containing polymers are not particularly limited and any of solution polymerization, suspension polymerization, bulk polymerization, emulsion polymerization, etc. can be used.

Moreover, the polymerization method may be addition polymerization such as ionic polymerization, radical polymerization, or living radical polymerization. Polymerization initiators known in the art may be used.

The blending amount of the fluorine-containing polymer, in terms of solid content, is preferably 0.1 parts by mass or more, more preferably 0.5 parts by mass or more, and is preferably 10 parts by mass or less, more preferably 5 parts by mass or less, per 100 parts by mass of the positive electrode active material. When the content of the binder is 0.1 parts by mass or more per 100 parts by mass of the positive electrode active material, it is possible to enhance the binding strength among the positive electrode active materials; the binding strength between the positive electrode active material, and the copolymer A and the conductive material; and the binding strength between the positive electrode active material and the current collector. This allows an electrochemical device manufactured using the slurry composition for an electrochemical device positive electrode to exhibit good output characteristics and longer battery life. In addition, when the content of the binder is 10 parts by mass or less, inhibition of ion migration by the binder can be prevented when an electrochemical device is manufactured using the slurry composition, and therefore the internal resistance of the electrochemical device can be reduced.

### <Other Components>

In addition to the above components, the disclosed slurry composition for an electrochemical device positive electrode may be mixed with other components such as binders other than fluorine-containing polymers, viscosity modifiers, reinforcing agents, antioxidants, and electrolyte additives having a function of suppressing decomposition of the electrolyte. These other components may be those known in the art.

### <Viscosity>

The disclosed slurry composition for an electrochemical device positive electrode preferably has a viscosity at 60 rpm of 1,000 mPa·s or more, more preferably 1,500 mPa·s or more, still more preferably 2,000 mPa·s or more, and is preferably 5,000 mPa·s or less, more preferably 4,500 mPa·s or less, still more preferably 4,000 mPa·s or less, from the viewpoint of stabilizing the coating amount of the slurry composition at the time of forming a positive electrode for an electrochemical device.

The viscosity of the slurry composition can be measured at 25°C using a B-type viscometer.

### <Method for Producing Slurry Composition for Electrochemical Device Positive Electrode>

The disclosed slurry composition for an electrochemical device positive electrode can be prepared by dispersing the components described above in a dispersion medium such as an organic solvent. Specifically, the slurry composition can be prepared for example by preparing in advance a composition for an electrochemical device positive electrode that comprises the copolymer A and an organic solvent (step of preparing a composition for an electrochemical device positive electrode), and mixing the obtained composition, a positive electrode active material, a conductive material, a fluorine-containing polymer as a binder, and optionally other components and an additional organic solvent (mixing step).

The mixing can be accomplished using a mixer known in the art, such as a ball mill, a sand mill, a bead mill, a pigment disperser, a grinding machine, an ultrasonic disperser, a homogenizer, a planetary mixer, or FILMIX. As the organic solvent, the same organic solvent as that described in the composition for an electrochemical device positive electrode can be used.

The above-described slurry composition for an electrochemical device positive electrode can be prepared in the manner described below, for example.

A slurry is obtained by mixing an organic solvent solution as a composition for an electrochemical device positive electrode, a fluorine-containing polymer, a positive electrode active material, a conductive material, and optionally other components and an additional organic solvent. The mixing may be accomplished either by mixing all the components at once or by mixing the components in any sequential order.

Alternatively, the disclosed slurry composition for an electrochemical device positive electrode may be prepared by preparing in advance a binder composition for an electrochemical device positive electrode that comprises the copolymer A, an organic solvent, and a fluorine-containing polymer as a binder (step of preparing a binder composition for an electrochemical device positive electrode), and then mixing the obtained binder composition, a positive electrode active material, a conductive material, and optionally other components and an additional organic solvent (mixing step).

### (Positive Electrode for Electrochemical Device)

The disclosed positive electrode for an electrochemical device can be produced using the disclosed slurry composition for an electrochemical device positive electrode.

The disclosed positive electrode for an electrochemical device comprises a current collector and a positive electrode mixed material layer formed on the current collector. The positive electrode mixed material layer comprises at least the copolymer A, a positive electrode active material, a conductive material, and a fluorine-containing polymer, and optionally comprises other components. The copolymer A, positive electrode active material, conductive material, and fluorine-containing polymer included in the positive electrode mixed material layer are derived from the disclosed slurry composition. The preferred ratios of these components are the same as those in the slurry composition.

In the positive electrode mixed material layer formed from the disclosed slurry composition, the positive electrode active material is protected by the copolymer A and transition metal ions derived from the positive electrode active material are captured by the copolymer A. Therefore, an electrochemical device that comprises the disclosed positive electrode for an electrochemical device that comprises such a positive electrode mixed material layer is excellent in electrical characteristics, such as high-temperature cycle characteristics and high-temperature storage characteristics. In addition, while a sufficient binding strength cannot be obtained only with the copolymer A and as such it is difficult to form a positive electrode mixed material layer, inclusion of a fluorine-containing polymer makes it possible to form a favorable positive electrode mixed material layer.

### <Method for Manufacturing Positive Electrode for Electrochemical Device>

Methods for manufacturing the disclosed positive electrode for an electrochemical device are not particularly limited. An exemplary manufacturing method includes applying the disclosed slurry composition onto at least one side of a current collector and drying the slurry composition to form a positive electrode mixed material layer. More specifically, the manufacturing method includes applying the slurry composition on at least one side of a current collector (applying step) and drying the slurry composition applied on the at least one side of the current collector to form a positive electrode mixed material layer on the current collector (drying step).

### [Applying step]

Methods of applying the slurry composition on a current collector are not particularly limited and any method known in the art can be used. Specific examples of coating methods that can be used include doctor blading, dip coating, reverse roll coating, direct roll coating, gravure coating, extrusion coating, and brush coating. At this time, the slurry composition may be applied on only one side of the current collector or may be applied to both sides of the current collector. The thickness of the slurry coating on the current collector after application but before drying may be appropriately set in accordance with the thickness of the positive electrode mixed material layer to be obtained after drying.

As the materials of the current collector to be coated with the slurry composition, materials having electrical conductivity and electrochemical durability are used. Specifically, the current collector may be made of aluminum or aluminum alloy. Aluminum and an aluminum alloy may be used in combination, or a combination of different types of aluminum alloys may be used. Aluminum and aluminum alloy are heat resistant and electrochemically stable and hence are superior materials for the current collector.

### [Drying step]

Any drying method known in the art may be used to dry the slurry composition applied on the current collector. Drying methods that can be used herein include drying by warm, hot, or low-humidity air; drying in a vacuum; and drying by irradiation with infrared light, electron beams, or the like. By drying the slurry composition applied on the current collector as described above, a positive electrode mixed material layer can be formed on the current collector, whereby a positive electrode for an electrochemical device can be obtained that comprises a current collector and a positive electrode mixed material layer.

After the drying step, the positive electrode mixed material layer may be further subjected to a pressing treatment, such as mold pressing or roll pressing. The pressing treatment can improve the close adherence between the positive electrode mixed material layer and the current collector.

Furthermore, when the positive electrode mixed material layer contains a curable polymer, the polymer is preferably cured after the positive electrode mixed material layer has been formed.

### (Electrochemical Device)

The disclosed electrochemical device is not particularly limited. The electrochemical device is, for example, a lithium-ion secondary battery or an electric double layer capacitor and is preferably a lithium-ion secondary battery. The disclosed electrochemical device comprises the disclosed positive electrode for an electrochemical device. Therefore, the disclosed electrochemical device is excellent in electrical characteristics such as high-temperature cycle characteristics and high-temperature storage characteristics.

By way of example, the following describes a case where the disclosed electrochemical device is a lithium-ion secondary battery. It should be noted, however, that the present disclosure is not limited to the example described below. A lithium-ion secondary battery as an example of the disclosed electrochemical device usually comprises electrodes (positive and negative electrodes), an electrolyte solution, and a separator, where the disclosed positive electrode for an electrochemical device is used as the positive electrode.

The following describes a configuration of a lithium-ion secondary battery as an example of the disclosed electrochemical device. The lithium-ion secondary battery generally comprises a negative electrode, an electrolyte solution and a separator, in addition to the disclosed positive electrode for an electrochemical device. Each component will be described below.

### <Negative Electrode>

The negative electrode of a lithium-ion secondary battery can be any negative electrode known in the art that is used as the negative electrode for lithium-ion secondary batteries. Specifically, the negative electrode may for example be a negative electrode formed of a thin sheet of lithium metal or a negative electrode obtained by forming a negative electrode mixed material layer on a current collector.

The current collector may be made of a metal material such as iron, copper, aluminum, nickel, stainless steel, titanium, tantalum, gold, or platinum. The negative electrode mixed material layer may comprise a negative electrode active material and a binder. The negative electrode active material is not particularly limited, and any known negative electrode active material may be used. The binder is not specifically limited and may be freely selected from known materials.

### <Electrolyte Solution>

The electrolyte solution is normally an organic electrolyte solution obtained by dissolving a supporting electrolyte in an organic solvent. The supporting electrolyte may, for example, be a lithium salt. Examples of lithium salts include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SOOOA)NLi. Among them, LiPF₆, LiClO₄, CF₃SO₃Li are preferred, with LiPF₆ being particularly preferred because it is soluble in solvents and exhibits a higher degree of dissociation. One electrolyte may be used individually, or two or more electrolytes may be used in combination in a freely selected ratio. In general, lithium-ion conductivity tends to increase when a supporting electrolyte having a high degree of dissociation is used. Therefore, lithium-ion conductivity can be adjusted through the type of supporting electrolyte that is used.

Organic solvents used for the electrolyte solution are not particularly limited so long as they are capable of dissolving supporting electrolytes. Suitable examples include carbonates such as dimethyl carbonate (DMC), ethylene carbonate (EC), diethyl carbonate (DEC), propylene carbonate (PC), butylene carbonate (BC), and methyl ethyl carbonate (EMC); esters such as γ-butyrolactone and methyl formate; ethers such as 1,2-dimethoxyethane and tetrahydrofuran; and sulfur-containing compounds such as sulfolane and dimethyl sulfoxide. Furthermore, mixtures of such solvents may also be used. Of these solvents, carbonates are preferred for their high dielectric constant and a broad stable potential region, and a mixture of ethylene carbonate and ethyl methyl carbonate is more preferred.

The concentration of the electrolyte in the electrolyte solution can be adjusted as appropriate and may, for example, be preferably 0.5% by mass to 15% by mass, more preferably 2% by mass to 13% by mass, still more preferably 5% by mass to 10% by mass. Any additive known in the art may be added to the electrolyte solution, such as fluoroethylene carbonate or ethyl methyl sulfone.

### <Separator>

Examples of separators that can be used include, but are not specifically limited to, those described in JP2012-204303A. Of these separators, microporous membranes made of polyolefinic (polyethylene, polypropylene, polybutene, or polyvinyl chloride) resin are preferred because such membranes can reduce the total thickness of the separator, thus increasing the ratio of the electrode active material in the lithium-ion secondary battery, and consequently increases the capacity per volume.

### <Method of Manufacturing Lithium-ion Secondary Battery>

The lithium-ion secondary battery according to the present disclosure can be manufactured for example by stacking a positive electrode and a negative electrode with a separator in-between, winding or folding the resultant stack as necessary in accordance with the battery shape, placing the stack in a battery container, injecting an electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

### EXAMPLES

The following provides a more specific explanation of the present disclosure through Examples, which however shall not be construes as limiting the scope of the present disclosure. In the following description, "%" and "part" used in expressing quantities are by mass, unless otherwise specified.

Various measurements and evaluations in Examples and Comparative Examples were made by the methods described below.

### <Glass Transition Temperature>

The composition for a lithium-ion secondary battery positive electrode (N-methylpyrrolidone (NMP) solution of copolymer) prepared in Example or Comparative Example was dried with a vacuum-dryer at 120°C for 10 hours. The glass transition temperature (°C) of the dried copolymer A was then measured in accordance with JIS K7121 using a differential scanning calorimeter (DSC6220SII, Nanotechnology Inc.) under the following condition: measurement temperature = -100°C to 180°C, heating rate = 5°C/min

### <Weight Average Molecular Weight>

The weight average molecular weight of the copolymer A prepared in Example or Comparative Example was measured by gel permeation chromatography (GPC) under the following condition using 10mM LiBr-NMP solution:
- Separation column: ShodexKD-806M (Showa Denko Co., Ltd.)
- Detector: Differential refractometer RID-10A (Shimadzu Corporation)
- Flow rate of eluent: 0.3 mL/min
- Column temperature: 40°C
- Reference polymer: TSK reference polystyrene (Tosoh Corporation)

### <Transition Metal Capturing Ability of Copolymer>

3 parts of solids of the composition for a lithium-ion secondary battery positive electrode (solid concentration = 8% by mass) prepared in Example or Comparative Example and 15 parts of solids of polyvinylidene fluoride in NMP (#7208, KUREHA CORPORATION, solid concentration = 8% by mass) were mixed and stirred using a rotation revolution mixer (Awatori Rentaro ARE310) at 2,000 rpm for 5 minutes. The obtained NMP solution was applied on one side of an aluminum foil having a thickness of 20 µm by the bar coating method (doctor blade: 220 µm) and dried at 130°C for 15 minutes to provide a polymer-coated aluminum foil. The polymer-coated aluminum foil was cut into a specimen film having a size of 50 mm × 800 mm. The amount of the polymer applied on the specimen was measured.

Nickel chloride (NiCl₂) was then dissolved into a solvent (ethyl methyl carbonate:ethylene carbonate = 70:30 (mass ratio)) to prepare a nickel chloride solution having a nickel concentration of 10 ppm by mass. Next, 40 g of the nickel chloride solution was placed in a glass container, and the specimen was immersed in the nickel chloride solution and allowed to stand at 25°C for 5 days. The specimen was removed from the container and sufficiently washed with diethyl carbonate. Diethyl carbonate present on the surface of the specimen was fully wiped off and the weight of the specimen was measured. The specimen was placed in a Teflon^{®} beaker, and sulfuric acid and nitric acid (sulfuric acid:nitric acid = 0.1:2 (volume ratio)) were added into the beaker. The contents of the beaker were heated on a hot plate and the acids were concentrated until carbonization of the specimen occurred. Further, nitric acid and perchloric acid (nitric acid: perchloric acid = 2:0.2 (volume ratio)) were added, followed by the addition of perchloric acid and hydrofluoric acid (perchloric acid: hydrofluoric acid = 2:0.2 (volume ratio)). The acids were concentrated until a white fume emerged. Next, nitric acid and ultrapure water (nitric acid:ultrapure water = 0.5:10 (volume ratio)) were added to the beaker and the contents thereof were heated. The contents of the beaker were left to cool and were then adjusted to a fixed volume to obtain a fixed volume solution. The content of nickel in the fixed volume solution was measured with an ICP mass spectrometer (ELANDRSII, PerkinElmer, Inc.). By dividing the amount of nickel in the fixed volume solution by the polymer amount of the specimen, the nickel concentration (% by mass) in the specimen was determined as a measure of transition metal capturing ability. The higher the nickel concentration, the higher the transition metal capturing ability of the copolymer.

### <Solid Concentration of Slurry Composition for Positive Electrode of Lithium-ion Secondary Battery>

The same steps as in <Preparation of Slurry Composition for Lithium-Ion Secondary Battery Positive Electrode> in Examples and Comparative Examples were carried out, and N-methylpyrrolidone was added to the obtained slurry composition so that the slurry viscosity as measured by a B-type viscometer (TVB-10, Toki Sangyo Co., Ltd., rotational speed = 60 rpm, measurement temperature = 25°C) became 3,500 mPa·s. The solid concentration of the obtained slurry composition was evaluated based on the criteria given below. The higher the solid concentration of the slurry composition, the more easily for the blended components to be dissolved or dispersed in N-methylpyrrolidone.
A: Solid concentration is 80% or more
B: Solid concentration is 78% or more and less than 80%
C: Solid concentration is 76% or more and less than 78%
D: Solid concentration is less than 76%

### <Viscosity Stability of Slurry Composition for Lithium-Ion Secondary Battery Positive Electrode>

The viscosity η0 of the slurry composition obtained in Example or Comparative Example was measured using a B-type viscometer (TVB-10, Toki Sangyo Co., Ltd., rotational speed = 60 rpm, measurement temperature = 25°C). After viscosity measurement, the slurry composition was stirred using a planetary mixer (rotational speed: 60 rpm) for 48 hours, and the viscosity η1 of the stirred slurry composition was measured using the B-type viscometer (rotational speed = 60 rpm, measurement temperature = 25°C) in the manner described above. Viscosity retention Δη (= η1/η0 × 100 (%)) of the slurry composition before and after stirring was calculated and the viscosity stability of the slurry composition was evaluated based on the criteria given below. The closer the value of the viscosity retention Δη is to 100%, the better the viscosity stability of the slurry composition, i.e., the slurry composition is less likely to gel.
A: Viscosity retention Δη is 90% or more and 110% or less
B: Viscosity retention Δη is 110% or more and less than 130%
C: Viscosity retention Δη is 130% or more and less than 150%
D: Viscosity retention Δη is less than 90% or greater than 150%

### <High-Temperature Cycle Characteristics>

The lithium-ion secondary battery manufactured in Example or Comparative Example was allowed to stand for 5 hours at a temperature of 25°C after injection of electrolyte solution. Next, the lithium-ion secondary battery was charged to a cell voltage of 3.65 V by the 0.2C constant-current method at a temperature of 25°C and subjected to aging treatment for 12 hours at a temperature of 60°C. The lithium-ion secondary battery was subsequently discharged to a cell voltage of 3.00 V by the 0.2C constant-current method at a temperature of 25°C. Thereafter, CC-CV charging of the lithium-ion secondary battery was performed by the 0.2C constant-current method (upper limit cell voltage: 4.20 V) and CC discharging of the lithium-ion secondary battery to 3.00 V was performed by the 0.2C constant-current method. This charging and discharging at 0.2C was repeated three times.

100 cycles of charging and discharging were performed at a cell voltage of 4.20-3.00V at a charging and discharging rate of 1.0C in an environment of 60°C. The discharge capacity at the first cycle was defined as X1 and the discharge capacity at the 100th cycle was defined as X2.

Using the discharge capacity X1 and the discharge capacity X2, the capacity change represented by ΔC' (= (X2/X1) × 100 (%)) was determined and evaluated based on the criteria given below. The larger the value of the capacity change ΔC', the better the high-temperature cycle characteristics of the lithium-ion secondary battery.
A: ΔC' is 90% or more
B: ΔC' is 87% or more and less than 90%
C: ΔC' is 84% or more and less than 87%
D: ΔC' is 82% or more and less than 84%
E: ΔC' is less than 80%

### <High-Temperature Storage Characteristics>

The lithium-ion secondary battery manufactured in Example or Comparative example was allowed to stand for 5 hours at a temperature of 25°C after injection of electrolyte solution. Next, the lithium-ion secondary battery was charged to a cell voltage of 3.65 V by the 0.2C constant-current method at a temperature of 25°C and subjected to aging treatment for 12 hours at a temperature of 60°C. The lithium-ion secondary battery was subsequently discharged to a cell voltage of 3.00 V by the 0.2C constant-current method at a temperature of 25°C. Thereafter, CC-CV charging of the lithium-ion secondary battery was performed by the 0.2C constant-current method (upper limit cell voltage: 4.20 V) and CC discharging of the lithium-ion secondary battery to 3.00 V was performed by the 0.2C constant-current method. This charging and discharging at 0.2C was repeated three times.

Thereafter, at 25°C, the battery was charged to a cell voltage of 4.2V and discharged to 3.0V by the 0.5C constant current method to measure the initial discharge capacity C0. Next, the battery was charged to a cell voltage of 4.2V by the 0.5C constant-current method at an ambient temperature of 25°C. The battery was then stored for 3 weeks at an ambient temperature of 60°C (high-temperature storage). After high-temperature storage, the battery was discharged to 3V by the 0.5C constant-current method and the remaining capacity C1 after high-temperature storage was measured.

Capacity retention (%) (= (remaining capacity C1/initial discharge capacity C0) × 100) was determined and evaluated based on the criteria given below. The larger the capacity retention, the better the high-temperature storage characteristics of the lithium-ion secondary battery.
A: Capacity retention is 90% or more
B: Capacity retention is 85% or more and less than 90%
C: Capacity retention is 80% or more and less than 85%
D: Capacity retention is less than 80%

### (Example 1)

### <Preparation of Composition for Lithium-Ion Secondary Battery Positive Electrode>

To an autoclave fitted with a stirrer were added 164 parts by mass of ion-exchanged water, 30 parts by mass of 2-acrylamido-2-methylpropane sulfonic acid (AMPS) as a sulfonic acid monomer, 20 parts by mass of acrylonitrile (AN) as a nitrile group-containing monomer, 49.5 parts by mass of n-butyl acrylate (BA) as an acrylic acid alkyl ester monomer, 0.5 parts by mass of methacrylic acid (MAA), 0.3 parts by mass of potassium persulfate as a polymerization initiator, 1.6 parts by mass of sodium lauryl sulfate as an emulsifier, and 1 part by mass of t-dodecyl mercaptan as a molecular weight adjuster. After thorough stirring, polymerization was carried out at 70°C for 3 hours and for 2 hours at 80°C to give an aqueous dispersion of copolymer A.

Next, a 4% aqueous lithium hydroxide solution was added to 100 parts of solids of the obtained aqueous dispersion of copolymer A to adjust its pH to 4.0. Then, 500 parts of N-methylpyrrolidone was added, and all of the water and the residual monomers were evaporated under reduced pressure together with 81 parts of N-methylpyrrolidone to give a composition for a lithium-ion secondary battery positive electrode (concentration: 8% by mass) containing N-methylpyrrolidone as a dispersing medium.

The obtained composition was used to measure the weight average molecular weight and the transition metal capturing ability of the copolymer A. The results are shown in Table 1.

### <Preparation of Slurry Composition for Positive Electrode of Lithium-ion Secondary Battery>

100 parts ofNCM(Li [Ni_{0.8}Co_{0.1}Mn_{0.1}]O₂) as a positive electrode active material, 2.5 parts of acetylene black (HS-100, Denka Company Ltd.) as a conductive material, 1.5 parts of solids of polyvinylidene fluoride (PVDF) (#7208, KUREHA CORPORATION) as a binder for a positive electrode, 0.3 parts of solids of the composition (solid concentration: 8% by mass) prepared as described above, and an appropriate amount of N-methylpyrrolidone as a dispersing medium were mixed and stirred (3,000 rpm, 20 minutes) with a disper blade to prepare a slurry composition for a lithium-ion secondary battery positive electrode. The content of N-methylpyrrolidone was adjusted so that the the slurry composition had a viscosity at 60 rpm of 3,500 mPa·s.

The solid concentration and slurry viscosity stability of the obtained slurry composition were measured. The results are shown in Table 1.

### <Preparation of Positive Electrode for Lithium-Ion Secondary Battery>

An aluminum foil having a thickness of 20 µm was provided as a current collector. The slurry composition obtained above was applied on one side of the foil by a comma coater so that the basis weight after drying became 20 mg/cm², dried at 90°C for 20 minutes and then at 120°C for 20 minutes, and heat-treated at 60°C for 10 hours to give a positive electrode web. The positive electrode web was rolled by a roll press to prepare a sheet of a positive electrode composed of a positive electrode mixed material layer (density: 3.2 g/cm³) and the aluminum foil. The sheet-shaped positive electrode was cut to have a width of 48.0 mm and a length of 47 cm to form a positive electrode for a lithium-ion secondary battery.

### <Preparation of Negative Electrode for Lithium-Ion Secondary Battery>

A mixture of 90 parts of spherical artificial graphite (volume average particle diameter: 12 µm) as a negative electrode active material and 10 parts of SiOₓ (volume average particle diameter: 10 µm), 1 part of a styrenebutadiene polymer as a binder for a negative electrode, 1 part of carboxymethyl cellulose as a thickener, and an appropriate amount of water as a dispersing medium were mixed and stirred by a planetary mixer to prepare a slurry for a secondary battery negative electrode.

Next, a copper foil having a thickness of 15 µm was provided as a current collector. The slurry for a secondary battery negative electrode obtained as described above was applied on one side of the copper foil so that the coating weight after drying became 10 mg/cm² and dried at 60°C for 20 minutes and then at 120°C for 20 minutes. Thereafter, 2 hour-heat treatment was performed at 150°C to give a negative electrode web. The negative electrode web was rolled by a roll press to prepare a sheet of a negative electrode composed of a negative electrode mixed material layer having a density of 1.6 g/cm³ and the copper foil. Then, the sheet-shaped negative electrode was cut to have a width of 50.0 mm and a length of 52 cm to form a negative electrode for a lithium-ion secondary battery.

### <Manufacture of Lithium-Ion Secondary Battery>

The positive and negative electrodes for a lithium-ion secondary battery prepared as described above were wound using a core having a diameter of 20 mm with a separator (microporous membrane made of polypropylene) having a thickness of 15 µm interposed between the electrodes so that the respective electrode mixed material layers face each other. In this way, a wound body was obtained. The wound body was compressed from one direction at a rate of 10 mm/ second until it had a thickness of 4.5 mm. The compressed wound body had an elliptical shape in plan view, and the ratio of the major axis to the minor axis (major axis/minor axis) was 7.7.

In addition, an electrolyte solution was prepared, which was 1.0M LiPF₆ solution containing a 3:7 (mass ratio) mixed solvent of ethylene carbonate and ethyl methyl carbonate blended with 5% by mass of fluoroethylene carbonate and as an additive 2% by volume of vinylene carbonate.

The compressed wound body was accommodated in an aluminum laminate case together with 3.2 g of the electrolyte solution. Then, a nickel lead wire was connected to a predetermined portion of the negative electrode for a lithium-ion secondary battery, an aluminum lead wire was connected to a predetermined portion of the positive electrode for a lithium-ion secondary battery. The opening of the case was heat-sealed to manufacture a lithium-ion secondary battery. This lithium-ion secondary battery had a pouch-shape with a width of 35 mm, a height of 60 mm, and a thickness of 5 mm, and the nominal capacity of the battery was 700 mAh. The obtained lithium-ion secondary battery was evaluated for high-temperature cycle characteristics and high-temperature storage characteristics. The results are shown in Table 1.

### (Examples 2 to 5)

A copolymer A, a slurry composition for a lithium-ion secondary battery positive electrode, a positive electrode for a lithium-ion secondary battery, a negative electrode for a lithium-ion secondary battery, and a lithium-ion secondary battery were prepared or manufactured and evaluated in the same manner as in Example 1, except that the blending amounts of 2-acrylamido-2-methylpropanesulfonic acid, acrylonitrile, n-butyl acrylate, and methacrylic acid used for the preparation of the copolymer A were changed as shown in Table 1. The results are shown in Table 1.

### (Examples 6 and 7)

A copolymer A, a slurry composition for a lithium-ion secondary battery positive electrode, a positive electrode for a lithium-ion secondary battery, a negative electrode for a lithium-ion secondary battery, and a lithium-ion secondary battery were prepared or manufactured and evaluated in the same manner as in Example 1, except that the amount (relative to 100 parts by mass of the active material) of the copolymer A used for the preparation of the slurry composition was changed as shown in Table 1. The results are shown in Table 1.

### (Example 8)

A copolymer A, a slurry composition for a lithium-ion secondary battery positive electrode, a positive electrode for a lithium-ion secondary battery, a negative electrode for a lithium-ion secondary battery, and a lithium-ion secondary battery were prepared or manufactured and evaluated in the same manner as in Example 1, except that the blending amount of t-dodecyl mercaptan used for the preparation of the copolymer A was changed to 0.1 parts. The results are shown in Table 1.

### (Example 9)

A copolymer A, a slurry composition for a lithium-ion secondary battery positive electrode, a positive electrode for a lithium-ion secondary battery, a negative electrode for a lithium-ion secondary battery, and a lithium-ion secondary battery were prepared or manufactured and evaluated in the same manner as in Example 1, except that the pH at the time of preparation of the copolymer A was changed to 7.0. The results are shown in Table 1.

### (Example 10)

A copolymer A, a slurry composition for a lithium-ion secondary battery positive electrode, a positive electrode for a lithium-ion secondary battery, a negative electrode for a lithium-ion secondary battery, and a lithium-ion secondary battery were prepared or manufactured and evaluated in the same manner as in Example 1, except that the 4% aqueous lithium hydroxide solution used for the preparation of the copolymer A was changed to a 4% aqueous sodium hydroxide solution. The results are shown in Table 1.

### (Example 11)

A copolymer A, a slurry composition for a lithium-ion secondary battery positive electrode, a positive electrode for a lithium-ion secondary battery, a negative electrode for a lithium-ion secondary battery, and a lithium-ion secondary battery were prepared or manufactured and evaluated in the same manner as in Example 1, except that the acrylic acid alkyl ester monomer used for the preparation of the copolymer A was changed from butyl acrylate (BA) to 2-ethylhexyl acrylate (2EHA). The results are shown in Table 1.

### (Example 12)

A copolymer A, a slurry composition for a positive electrode of a lithium-ion secondary battery, a positive electrode for a lithium-ion secondary battery, a negative electrode for a lithium-ion secondary battery, and a lithium-ion secondary battery were prepared or manufactured and evaluated in the same manner as in Example 1, except that the sulfonic acid monomer at the time of preparation of the copolymer A was changed from 2-acrylamido-2-methylpropanesulfonic acid (AMPS) to styrenesulfonic acid. The results are shown in Table 1.

### (Comparative Example 1)

A slurry composition for a positive electrode of a lithium-ion secondary battery, a positive electrode for a lithium-ion secondary battery, a negative electrode for a lithium-ion secondary battery, and a lithium-ion secondary battery were prepared or manufactured and evaluated in the same manner as in Example 1, except that the copolymer A was not used for the preparation of the slurry composition. The results are shown in Table 1.

### (Comparative Example 2)

A copolymer, a slurry composition for a positive electrode of a lithium-ion secondary battery, a positive electrode for a lithium-ion secondary battery, a negative electrode for a lithium-ion secondary battery, and a lithium-ion secondary battery were prepared or manufactured and evaluated in the same manner as in Example 1, except that the monomers used to prepare the copolymer A were changed to 2 parts by mass of 2-acrylamido-2-methanesulphonic acid, 8 parts by mass of acrylonitrile, 65 parts by mass of n-butyl acrylate, 20 parts by mass of methyl methacrylate (MMA), and 20 parts by mass of acrylamide (AAM) and that the pH of the obtained copolymer A was changed to 7.0 using a 4% aqueous sodium hydroxide solution. The results are shown in Table 1.

### (Comparative Example 3)

A copolymer, a slurry composition for a positive electrode of a lithium-ion secondary battery, a positive electrode for a lithium-ion secondary battery, a negative electrode for a lithium-ion secondary battery, and a lithium-ion secondary battery were prepared or manufactured and evaluated in the same manner as in Example 1, except that the monomers used for the preparation of the copolymer A were changed to 20 parts by mass of acrylonitrile, 60 parts by mass of n-butyl acrylate, and 20 parts by mass of methacrylic acid. The results are shown in Table 1.

### (Comparative Examples 4 to 6)

A copolymer, a slurry composition for a positive electrode of a lithium-ion secondary battery, a positive electrode for a lithium-ion secondary battery, a negative electrode for a lithium-ion secondary battery, and a lithium-ion secondary battery were prepared or manufactured and evaluated in the same manner as in Example 1, except that the blending amounts of 2-acrylamido-2-methylpropanesulfonic acid, acrylonitrile, n-butyl acrylate, and methacrylic acid used for the preparation of the copolymer A were changed as shown in Table 1. The results are shown in Table 1.

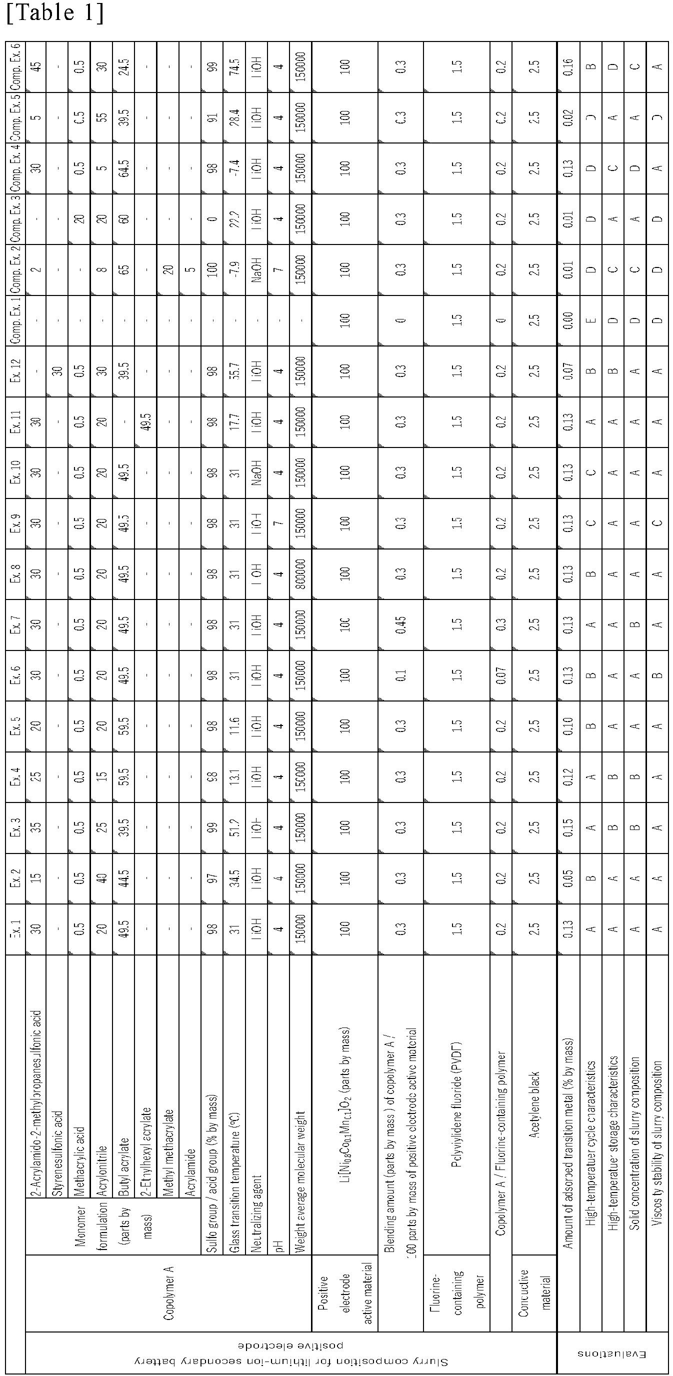

It can be seen from Table 1 that Examples 1 to 12 where a slurry composition that comprises a copolymer A comprising a sulfo group-containing monomer unit and a nitrile group-containing monomer unit in amounts that fall within the respective specific ranges is used enabled an electrochemical device to have good high-temperature cycle characteristics and good high-temperature storage characteristics.

On the other hand, it can be seen that Comparative Example 1 where a slurry composition that does not comprise the copolymer A is used resulted in poor high-temperature cycle characteristics and poor high-temperature storage characteristics.

It can also be seen that Comparative Example 2 where a slurry composition that comprises a copolymer comprising a sulfo group-containing monomer unit and a nitrile group-containing monomer in amounts of less than 10% by mass respectively failed to achieve good high-temperature cycle characteristics and high-temperature storage characteristics.

It can also be seen that Comparative Example 3 where a slurry composition that comprises a copolymer comprising a carboxylic acid group-containing monomer unit instead of the sulfo group-containing monomer unit is used failed to achieve good high-temperature cycle characteristics.

It can also be seen that Comparative Example 4 where a slurry composition that comprises a copolymer comprising a nitrile group-containing monomer unit in an amount of less than 10% by mass is used failed to achieve good high-temperature cycle characteristics and high-temperature storage characteristics.

It can also be seen that Comparative Example 5 where a slurry composition that comprises a copolymer comprising a sulfo group-containing monomer unit in an amount of less than 10% by mass and a nitrile group-containing monomer unit in an amount of more than 45% by mass is used failed to achieve good high-temperature cycle characteristics.

It can also be seen that Comparative Example 6 where a slurry composition that comprises a copolymer comprising a sulfo group-containing monomer unit in an amount of more than 40 % by mass is used failed to achieve good high-temperature storage characteristics.

### INDUSTRIAL APPLICABILITY

According to the present disclosure, it is possible to provide a composition for an electrochemical device positive electrode, which can provide a positive electrode that enables metal capturing in the positive electrode mixed material layer and improves the electrical characteristics of an electrochemical device.

According to the present disclosure, it is also possible to provide a slurry composition for an electrochemical device positive electrode, which can improve the electrical characteristics of an electrochemical device.

According to the present disclosure, it is also possible to provide a positive electrode for an electrochemical device, which can improve the electrical characteristics of an electrochemical device, and an electrochemical device having excellent electrical characteristics.

## Claims

1. A composition for an electrochemical device positive electrode, comprising:
a copolymer A comprising a sulfo group-containing monomer unit in an amount of 10% by mass or more and 40% by mass or less and a nitrile group-containing monomer unit in an amount of 10% by mass or more and 45% by mass or less.

2. The composition for an electrochemical device positive electrode according to claim 1, wherein the copolymer A has a glass transition temperature of -5°C or higher.

3. The composition for an electrochemical device positive electrode according to claim 1 or 2, wherein the copolymer A further comprises a (meth)acrylic acid alkyl ester monomer unit having an alkyl chain having 4 to 10 carbon atoms in an amount of 30% by mass or more and 65% by mass or less.

4. The composition for an electrochemical device positive electrode according to any one of claims 1 to 3, wherein the composition further comprises water, and
the composition has a pH of less than 7.

5. The composition for an electrochemical device positive electrode according to any one of claims 1 to 4, wherein the sulfo group-containing monomer unit is a 2-acrylamido-2-methylpropanesulfonic acid monomer unit.

6. A slurry composition for an electrochemical device positive electrode, comprising:
the composition for an electrochemical device positive electrode according to any one of claims 1 to 5;
a fluorine-containing polymer;
a positive electrode active material; and
a conductive material.

7. The slurry composition for an electrochemical device positive electrode according to claim 6, wherein a content of the copolymer A is 0.05 parts by mass or more and 0.5 parts by mass or less per 100 parts by mass of the positive electrode active material.

8. A positive electrode for an electrochemical device, comprising:
a positive electrode mixed material layer formed using the slurry composition for an electrochemical device positive electrode according to claim 6 or 7.

9. An electrochemical device comprising:
the positive electrode for an electrochemical device according to claim 8.
